# EUROPÄISCHE PATENTANMELDUNG

(11) **EP 3 680 162 A1**
(43) Veröffentlichungstag der Anmeldung: **15.07.2020**
(21) Anmeldenummer: 20150629.2
(22) Anmeldetag: 07.01.2020
(51) Int. Cl.: B62M 6/90, H01M 2/10

(54) **AKKUMULATORSYSTEM FÜR EIN ELEKTRISCH ANTREIBBARES FAHRRAD**

(30) Priorität: 10.01.2019 DE 102019100558
(71) Anmelder: Nickl, Andreas Josef, 92637 Weiden (DE)
(72) Erfinder: Nickl, Andreas Josef, 92637 Weiden (DE)
(74) Vertreter: Lang, Christian

(57) **Zusammenfassung**

Die Erfindung betrifft ein Akkumulatorsystem (1) für ein elektrisch antreibbares Fahrrad mit einem Elektromotor, wobei das Akkumulatorsystem zumindest einen Akkumulator (11) und einen Controller (13) zur Steuerung des Elektromotors umfasst. Die Erfindung bietet eine bessere Gewichtsverteilung der an einem elektrisch antreibbaren Fahrrad gegenüber einem herkömmlichen Fahrrad zusätzlich vorhanden Komponenten. Das erfindungsgemäße Akkumulatorsystem (1) ist dadurch gekennzeichnet, dass der Akkumulator (11) in einer Umhüllung angeordnet ist, die als Satteltasche (14) ausgebildet ist, welche zur Befestigung unter dem Sattel des Fahrrads vorgesehen ist.

## Beschreibung

### HINTERGRUND DER ERFINDUNG

### GEBIET DER ERFINDUNG

Die Erfindung betrifft ein Akkumulatorsystem für ein elektrisch antreibbares Fahrrad.

### STAND DER TECHNIK

Aus dem Stand der Technik sind elektrisch antreibbare Fahrräder, sogenannte E-Bikes, bekannt, in die ein Elektromotor integriert ist, welcher die Hinterachse oder die Tretkurbel des Fahrrades antreiben kann, wobei die dadurch zur Verfügung gestellte zusätzliche Antriebskraft optional ist. D.h. ein Benutzer kann den Elektromotor nach eigenem Ermessen aktivieren, etwa bei einer Bergauffahrt, oder deaktivieren, etwa bei einer Bergabfahrt oder auf einem gering bis gar nicht geneigten Streckenabschnitt. Der Elektromotor wird mittels eines Akkumulators mit Strom versorgt, wobei in der Regel Lithiumionen-Akkumulatoren aufgrund ihres im Vergleich zu anderen Akkumulatortypen geringen Gewichts und ihrer hohen Energiedichte verwendet werden.

Die beiden wesentlichen gegenüber einem herkömmlichen Fahrrad zusätzlichen Komponenten Akkumulator und Elektromotor haben ein erhebliches Volumen und Gewicht, was auch für Lithiumionen-Akkumulatoren gilt, weswegen sich bei der Konstruktion eines elektrisch antreibbaren Fahrrads die Frage stellt, wo diese Komponenten in das Fahrrad integriert werden sollen. Der Elektromotor kann als Heck - oder Frontmotor ausgeführt sein und wird im Stand der Technik üblicherweise in der Hinterradachse oder dem Rahmen des Fahrrades angeordnet, wobei in ersterem Fall direkt das Hinterrad und im letzteren Fall die Tretkurbel durch den Elektromotor antreibbar ist. Der Akkumulator wird, eingefasst in ein entsprechendes Gehäuse, entweder an dem Rahmen des Fahrrades oder an dessen Gepäckträger befestigt, was jedoch eine ungünstige Gewichtsverteilung zur Folge hat. Ferner kann wegen des Gehäuses die in dem Akkumulator aufgrund des elektrischen Widerstandes der Ackumulatorzellen entstehende Wärme nicht effektiv abgeführt werden, was bei einer hohen Leistungsabgabe oder -aufnahme und hohen Außentemperaturen zu einer Kapazitätsminderung und schließlich zu dem völligen Ausfall des Akkumulators führen kann. Denn wenn die Temperatur des Akkumulators zu hoch ist, verdampft die Elektrolytflüssigkeit in dem Akkumulator. In diesem Zusammenhang ist zu erwähnen, dass auch zu niedrige Temperaturen die Kapazität des Akkumulators herabsetzen, weil dann die Elektrolytflüssigkeit zäher wird und schließlich gefriert und dadurch die Leitfähigkeit abnimmt.

Der für die Ansteuerung des Elektromotors erforderliche Controller ist in dem Rahmen des Fahrrades oder in einem Kunststoffbehälter an dem Rahmen angeordnet. Dies hat zur Folge, dass die beim Betrieb des Controllers entstehende Wärme nicht in ausreichendem Maße abgeführt werden kann, was insbesondere bei hohen Außentemperaturen die Überhitzung des Controllers zur Folge haben kann.

### OFFENBARUNG DER ERFINDUNG

### AUFGABE DER ERFINDUNG

Die der vorliegenden Erfindung zugrunde liegende Aufgabe ist es, ein Akkumulatorsystem für ein elektrisch antreibbares Fahrrad bzw. ein entsprechendes Fahrrad zu schaffen, bei dem zum einen eine bessere Gewichtsverteilung und zum anderen Überhitzungsprobleme vermieden werden. Außerdem soll die Anordnung des Akkumulators optisch ansprechend gestaltet sein.

### TECHNISCHE LÖSUNG

Zur Lösung der Aufgabe wird ein Akkumulatorsystem mit den Merkmalen von Anspruch 1 und ein Fahrrad mit den Merkmalen von Anspruch 12 vorgeschlagen. Weitere Ausgestaltungen des erfindungsgemäßen Akkumulatorsystems bzw. Fahrrads sind Gegenstand der abhängigen Ansprüche.

Das erfindungsgemäße Akkumulatorsystem zeichnet sich dadurch aus, dass der Ackumulator in einer Umhüllung angeordnet ist, die als Satteltasche ausgebildet ist, welche zur Befestigung an dem Sattel des Fahrrads vorgesehen ist. Hierdurch wird eine für den Gebrauch des Fahrrades sehr günstige Gewichtsverteilung erreicht, da sich der Akkumulator in unmittelbarer Nähe des bei der Fahrt auf dem Sattel sitzenden Benutzers und dessen Massenschwerpunkt befindet. Darüber hinaus ist der Ackumulator optisch gut in das Fahrrad integriert, weil Satteltaschen durchaus üblich sind, beispielsweis zur Aufbewahrung von Werkzeug, und das Fahrrad dadurch nicht sofort als E-Bike erkenntlich ist, im Gegensatz zu einer Befestigung des Akkumulators an dem Rahmen oder dem Gepäckträger des Fahrrades. Außerdem ermöglicht die Anordnung unter dem Sattel eine gute Belüftung und somit Wärmeabfuhr.

Es kann weiter vorgesehen sein, dass die Umhüllung zumindest teilweise aus einem flexiblen Material gebildet ist, sodass eine einfache Aufnahme des Akkumulators in der Umhüllung und platzsparende Anordnung des Akkumulators am Fahrrad möglich ist. Außerdem kann eine flexible Umhüllung sehr dünn ausgeführt sein, sodass auch die Wärmeabfuhr begünstigt ist. Die Umhüllung kann ein ein - oder mehrlagiges Textil oder Kunststoff umfassen, wodurch zum einen erreicht wird, dass die Umhüllung das Erscheinungsbild von herkömmlichen Satteltaschen hat, und zum anderen, dass eine ausreichende Abfuhr der von dem Akkumulator erzeugten Wärme bewirkt werden kann. Es gibt eine Reihe von Textilien die einerseits wasserabweisend und andererseits luftdurchlässig sind und folglich der Akkumulator vor dem Eindringen von Wasser, beispielsweise Regenwasser, geschützt ist, die von diesem erzeugte Wärme aber zügig abgeführt wird. Außerdem kann das Textil hitzebeständig sein und insbesondere gemäß DIN 4102 B1 schwer entflammbar sein. Auch Kombinationen von mehreren Textilien, insbesondere durch mehrlagige Ausgestaltungen sind denkbar. Als Beispiele für derartige Textilen kommen entsprechend imprägnierte Baumwollnessel bzw. Segeltuchstoffe oder Textilien mit Kunstfasern, wie beispielsweise Nomex (Handelsmarke) - Fasern von Dupont, oder vergleichbare Textilien oder Stoffe in Frage.

Der Akkumulator und der Controller für die Steuerung des Elektroantriebs des Fahrrads können gemeinsam in der Umhüllung angeordnet sein, wobei ein Hitzeschild zwischen dem Akkumulator und dem Controller angeordnet sein kann. Bei dieser Ausgestaltung sind der Akkumulator und der Controller auf engstem Raum untergebracht. Im Zusammenspiel mit weiteren leichten Komponenten des Fahrrades entstehen leichte E-Bikes, die einfacher handzuhaben sind als herkömmliche schwerere E-Bikes. Dies macht sich sowohl während der Fahrt mit dem Fahrrad als auch bei der Handhabung, wie beispielsweise dem Aufladen auf einen Heckträger eines Personenkraftwagens oder bei dem Einladen in einen Zug bemerkbar. Auch bei dem eigentlichen Einsatz des Fahrrads wirkt sich dies aus, etwa bei dem Herumheben in die richtige Fahrtrichtung aus einer Abstellposition vor dem Losfahren.

Der Hitzeschild kann vorzugsweise als eine Platte aus einem Material mit geringer Wärmeleitfähigkeit ausgebildet sein. Eine solch einfache Geometrie resultiert zunächst in günstigen Herstellungskosten. Weiter kann die Platte aber auch aus der Satteltasche entnehmbar sein, sodass der Akkumulator und der Controller unmittelbar aneinander anliegen. Zwar ist die primäre Funktion des Hitzeschilds, einen Wärmeübertrag von dem Controller auf den Akkumulator zu verhindern, da eine zu hohe Temperatur die Leistungsfähigkeit des Akkumulators beeinträchtigt. Jedoch kann gerade dieser Wärmeübertrag auch vorteilhaft sein. Denn auch zu niedrige Temperaturen bei Fahrten im Winter beeinträchtigen die Leistungsfähigkeit des Akkumulators, sodass durch Entfernen des Hitzeschilds verhindert werden kann, dass der Akkumulator die Außentemperatur annimmt, ohne dass es einer Akkumulator-Heizung bedarf. Außerdem können mehrere verschiedene Austauschplatten vorgesehen sein, die je nach Temperatursituation Verwendung finden können, beispielsweise Platten mit unterschiedlich vielen und/oder unterschiedlich großen Öffnungen.

Der Hitzeschild kann zumindest teilweise aus einem Kunststoff oder einem Kunststoffgemisch gebildet sein, da Kunststoffe eine besonders geringe Wärmeleitfähigkeit haben, preiswert sind und überdies nur ein sehr geringes Gewicht haben.

In weiterer Ausgestaltung des erfindungsgemäßen Akkumulatorsystems kann der Akkumulator eine Ummantelung aufweisen, in der die einzelnen Akkumulatorzellen des Akkumulators und eine Akkusteuerung zur Steuerung des Betriebs des Akkus, insbesondere des Ladens und Entladens des Akkumulators, aufgenommen sein kann. Die Ummantelung kann flexibel ausgebildet sein, sodass eine sehr kompakte Ausbildung des Akkus möglich ist. Die Ummantelung kann zu einem überwiegenden Anteil die Außenseite des Akkumulators bilden, wobei die Ummantelung sich in ihrer Form an die umschlossenen Komponenten anschmiegen kann. Lediglich Teile der Komponenten, wie eine Ladeanzeige, Verbindungskabel oder dergleichen können nicht von der Ummantelung umschlossen sein. Die Ummantelung kann wasserabweisend und / oder stoßdämpfend und / oder wärmeisolierend ausgeführt sein. Eine wasserabweisende Umhüllung, die beispielsweise aus Kunststoff bestehen kann, vermag den Akkumulator vor dem Eindringen von Wasser und Feuchtigkeit zu schützen. Eine stoßdämpfende Ummantelung kann den Akkumulator vor Beschädigungen durch mechanische Einwirkungen, etwa infolge eines Sturzes, schützen. Eine wärmeisolierende Ummantelung kann den Akkumulator gegenüber einer geringen Außentemperatur dämmen und so dessen zu starke Abkühlung verhindern. Wie bereits oben erwähnt, führen sowohl zu niedrige als auch zu hohe Temperaturen zu Kapazitätseinbußen.

Die Ummantelung kann eine erste innenliegende Lage und eine zweite außenliegende Lage aufweisen, wobei die erste Lage aus Moosgummi oder Porengummi, insbesondere Chloropren oder Polychloropren (Neopren®) oder Chlorbutadien, und die zweite Lage aus einer Kunststofffolie gebildet sein kann. Polychloropren ist zum einen ein guter Wärmeisolator, kann zum anderen aber auch in bestimmtem Maße Stöße absorbieren, weswegen dieses Material eine doppelte Funktion erfüllt. Die Kunststofffolie ist wasserabweisend und bewirkt zudem, dass die erste Polychloropren - Lage eng an dem Akkumulator anliegt und die Ummantelung nicht von diesem abrutscht. Bei der zweiten Lage kann es sich um eine Schrumpffolie handeln, was den Vorteil hat, dass die Ummantelung die äußere Form des Akkumulators annimmt und darum zuverlässig mit diesem verbunden ist.

Eine Akkumulatorsteuerung des Akkumulators kann ferner einen Schalter zur elektrischen Ankopplung des Akkumulators an den Elektromotor und zur elektrischen Entkopplung von diesem bzw. zur Verbindung oder Trennung eines Ladeanschlusses angeordnet sein. Auch kann die Leistung des Akkumulators mittels dieses Schalters oder eines separaten Schalters kann in mehreren Stufen einstellbar sein. Durch den Schalter kann gewährleistet werden, dass der Akkumulator bei der Nutzung der Motorunterstützung des E-Bikes immer bereit steht, Energie abzugeben, da auf eine automatische Abschaltung des Akkumulators verzichtet werden kann, da diese stattdessen manuell erfolgen kann. Viele Fahrer nutzen auf flachen Strecken die Motorunterstützung nicht, sodass die Motorunterstützungsstufe "0" gewählt wird. In diesem Fall kann es bei einem Akkumulator mit automatischer Abschaltung zu einer Abschaltung des Akkus kommen, sodass der Akkumulator erst wieder manuell aktiviert werden muss, wenn bei einer zu bewältigenden Steigung eine Motorunterstützungsstufe zwischen "1" und "6" ausgewählt wird. Dies kann bei der Ausgestaltung mit einem Ein - / Ausschalter nicht passieren, da der Akkumulator nur manuell ausgeschaltet wird, ansonsten aber eingeschaltet bleibt, sodass die Kraft des Elektromotors sofort zur Verfügung steht.

Der Akkumulator bzw. die Akkusteuerung kann ferner ein Batterie - Management - System und / oder einen Überhitzungsschutz und / oder eine Schmelzsicherung umfassen. Das Batterie - Management - System (BTM) steuert die Zellen des Akkumulators optimal an und ermittelt außerdem den aktuellen Ladezustand. Ein Überhitzungsschutz dient dazu, den Akkumulator abzuschalten, falls dieser zu heiß werden sollte. Mittels einer Schmelzsicherung kann der Stromkreis unterbrochen werden, wenn zu große Ströme fließen, insbesondere im Falle eines Kurzschlusses.

### KURZBESCHREIBUNG DER FIGUREN

- Fig. 1: zeigt eine perspektivische Ansicht eines bevorzugten Ausführungsbeispiels eines erfindungsgemäßen Akkumulatorsystems,
- Fig. 2: zeigt eine perspektivische Ansicht des Akkumulators des Ausführungsbeispiels aus Figur 1 und
- Fig. 3: zeigt einen Schaltplan einer Akkusteuerung eines Ausführungsbeispiels

### AUSFÜHRUNGSBEISPIELE

Im Folgenden werden ein Ausführungsbeispiel der Erfindung anhand von Zeichnungen näher beschrieben. Allerdings ist die Erfindung nicht auf diese Ausführungsbeispiele beschränkt.

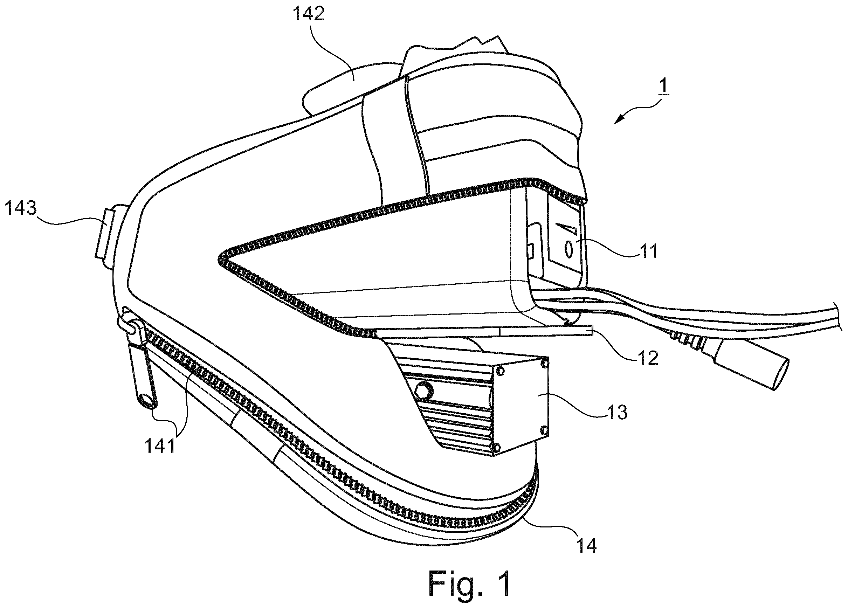

Figur 1 zeigt eine perspektivische Ansicht eines Ausführungsbeispiels des erfindungsgemäßen Akkumulatorsystems 1, bei dem ein Akkumulator 11, ein Hitzeschild in Form einer Platte 12 und ein Controller 13 mit einem metallenen Gehäuse in einer Umhüllung in Form einer Satteltasche 14 angeordnet sind. Die Platte 12 besteht aus einem Kunststoff und bewirkt eine thermische Isolation zwischen dem Akkumulator 11 und dem Controller 13, sodass die von dem Controller abgegebene Wärme nicht auf den Akkumulator 11 übertragen wird. Die Satteltasche 14 besteht aus einem Textil und weist einen Reißverschluss141 auf, mit dem die Satteltasche 14 leicht geöffnet und wieder verschlossen werden kann, um den Akkumulator 11 beispielsweise zum Zwecke des Aufladens aus der Satteltasche 14 zu entfernen und anschließend wieder in diese zu verbringen. Der Akkumulator kann jedoch auch in der Satteltasche geladen werden, wobei jedoch durch die entnehmbare Anordnung ein leichter Austausch und eine flexible Handhabung möglich ist. Die Satteltasche 14 weist ferner eine Halterung 142 auf, mit der die Satteltasche 14 an dem Sattel eines Fahrrades befestigt oder dort eingehängt werden kann. Daneben ist an der Satteltasche 14 ein Befestigungsmittel 143 vorgesehen, mit dem die Satteltasche 14 an dem Sattelrohr des Fahrrades befestigt werden kann. Die Halterung 142 und das Befestigungsmittel 143 können als Schlaufe ausgebildet sein, wobei die Schlaufe mittels eines Klettverschlusses oder einer Knopfverbindung schließbar sein kann.

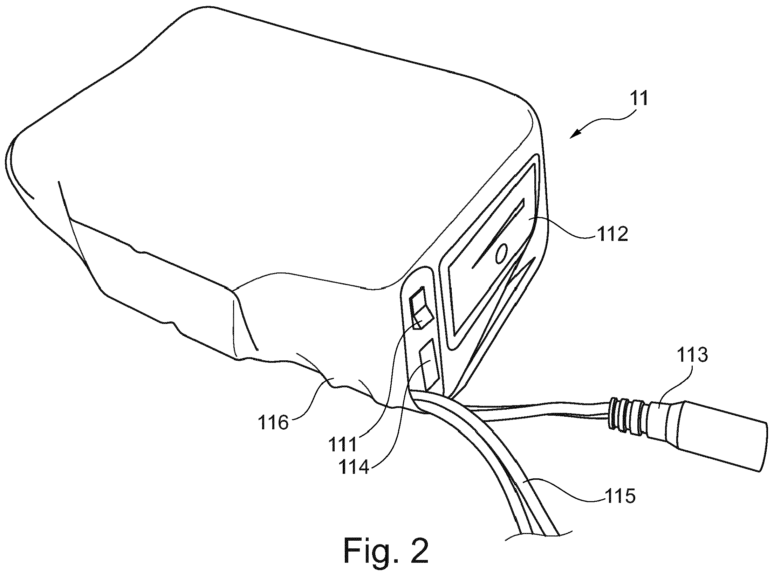

Fig. 2 zeigt eine perspektivische Ansicht des Akkumulators 11 des bevorzugten Ausführungsbeispiels. Der Akkumulator 11 weist einen Schalter 111 zur Ankopplung an den Elektromotor eines Fahrrads und zur Entkopplung von diesem auf. Ferner ist an dem Akkumulator 11 eine Ladeanzeige 112 angeordnet, mit deren Hilfe der Ladezustand des Akkumulators 11 erkannt werden kann. Mit dem Akkumulator 11 ist eine als Hohlbuchse ausgebildete Ladebuchse 113 über ein Kabel verbunden, mit der der Akkumulator 11 leicht mit einer Spannungs- und Stromquelle zum Zwecke des Aufladens verbunden werden kann. Ferner weist der Akkumulator 11 eine Schmelzsicherung 114 auf, welche verhindert, dass ein zu starker Strom fließt, wobei die Schmelzsicherung 114 ab einer bestimmten Stromstärke durchschmilzt und der Akkumulator 11 erst nach Einsetzen einer neuen Sicherung wieder funktionstüchtig ist. Über Kabel 115 ist der Akkumulator 11 mit dem Controller 13 verbunden. Schließlich ist der Akkumulator 11 von einer Schrumpffolie 116 umgeben, unter der sich eine Polychloropren-Lage verbirgt (nicht gezeigt). Die Schrumpffolie verhindert das Eindringen von Wasser und Feuchtigkeit in den Akkumulator 11 und die Polychloropren-Lage wirkt zum einen stoßabsorbierend und bewirkt zum anderen eine zusätzliche thermische Isolation des Akkumulators 11.

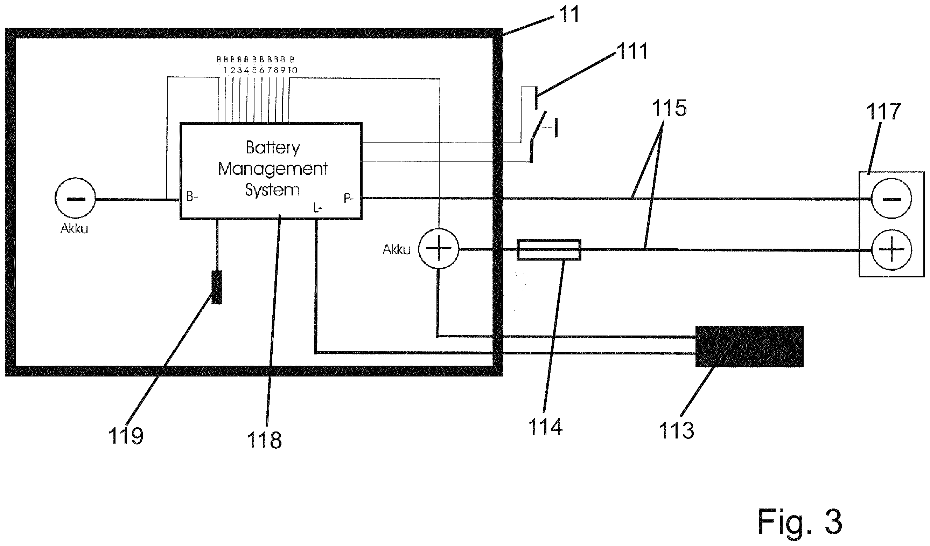

Fig. 3 zeigt einen Schaltplan des bevorzugten Ausführungsbeispiels. Neben dem bereits zuvor genannten Schalter 111, der Ladebuchse 113, der Schmelzsicherung 114, den Kabeln 115 zur Verbindung mit dem Controller 13 weist das Akkumulatorsystem 1 ein Batterie-Management-System (BTM) 118 auf, welches mit einem Temperaturfühler 119 elektrisch verbunden ist. Mit Hilfe des Temperaturfühlers 119 überwacht das BTM die Temperatur der Akkumulators 11. Die Ladebuchse 113 ist mit dem Pluspol des Akkumulators 11 und dem Batterie-Management-System 18 elektrisch verbunden. Die Kabel 115 sind mit einem Hochleistungssteckverbinder 117 elektrisch verbunden, welcher in den Controller 13 einsteckbar ist. Die Schmelzsicherung 114 ist mit einem der Kabel 115 und mit dem Pluspol des Akkumulators 11 elektrisch verbunden, sodass bei einer zu großen Stromstärke die elektrische Verbindung zwischen dem Controller 13 und dem Akkumulator 11 unterbrochen wird. Das Batterie-Management-System ist ferner mit dem Minuspol des Akkumulators 11, mit dem Hochleistungssteckverbinder 117 sowie mit der Ladebuchse 113 elektrisch verbunden.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der Einzelmerkmale des Ausführungsbeispiels mit ein.

## Patentansprüche

1. Akkumulatorsystem für ein elektrisch antreibbares Fahrrad mit einem Elektromotor, wobei das Akkumulatorsystem (1) zumindest einen Akkumulator (11) und einen Controller (13) zur Steuerung des Elektromotors umfasst,
**dadurch gekennzeichnet, dass**
der Akkumulator (11) in einer Umhüllung angeordnet ist, die als Satteltasche (14) ausgebildet ist, welche zur Befestigung an dem Sattel des Fahrrads vorgesehen ist.

2. Akkumulatorsystem nach Anspruch 1,
**dadurch gekennzeichnet, dass**
die Umhüllung zumindest teilweise aus einem flexiblen Material, insbesondere aus einem ein- oder mehrlagigen Textil oder Kunststoff gebildet ist.

3. Akkumulatorsystem nach Anspruch 1 oder 2,
**dadurch gekennzeichnet, dass**
der Akkumulator (11) und der Controller (13) gemeinsam in der Umhüllung angeordnet sind, wobei ein Hitzeschild zwischen dem Akkumulator (11) und dem Controller (13) angeordnet ist.

4. Akkumulatorsystem nach Anspruch 3,
**dadurch gekennzeichnet, dass**
der Hitzeschild als eine Platte (12) aus einem Material mit geringer Wärmeleitfähigkeit ausgebildet ist.

5. Akkumulatorsystem nach einem der Ansprüche 3 oder 4,
**dadurch gekennzeichnet, dass**
der Hitzeschild zumindest teilweise aus einem Kunststoff oder einem Kunststoffgemisch gebildet ist.

6. Akkumulatorsystem nach einem der vorhergehenden Ansprüche,
**dadurch gekennzeichnet, dass**
der Akkumulator (11) mehrere Akkumulatorzellen und eine Akkusteuerung umfasst, die zumindest teilweise in einer Ummantelung aufgenommen sind, die flexibel ist und zu einem überwiegenden Anteil die Außenseite des Akkumulators bildet, wobei die Ummantelung sich in ihrer Form an die umschlossenen Komponenten anschmiegt.

7. Akkumulatorsystem nach Anspruch 6,
**dadurch gekennzeichnet, dass**
die wasserabweisend und / oder stoßdämpfend und / oder wärmeisolierend ist.

8. Akkumulatorsystem nach Anspruch 6 oder 7,
**dadurch gekennzeichnet, dass**
die Ummantelung eine erste innenliegende Lage und eine zweite außenliegende Lage aufweist, wobei die erste Lage aus Moosgummi oder Porengummi, insbesondere Chloropren oder Polychloropren oder Chlorbutadien, und die zweite Lage aus einer Kunststofffolie besteht.

9. Akkumulatorsystem nach Anspruch 8,
**dadurch gekennzeichnet, dass**
die zweite Lage eine Schrumpffolie (116) ist.

10. Akkumulatorsystem (1) nach einem der vorhergehenden Ansprüche,
**dadurch gekennzeichnet, dass**
der Akkumulator (11) eine Akkusteuerung umfasst, die ein Batterie-Management-System und/oder einen Überhitzungsschutz und/oder eine Schmelzsicherung aufweist.

11. Akkumulatorsystem (1) nach einem der vorhergehenden Ansprüche,
**dadurch gekennzeichnet, dass**
das an dem Akkumulator (11) ein Schalter (111) zur Unterbrechung oder Herstellung einer elektrischen Verbindung der Akkumulatorzellen mit einer Energiequelle zum Laden der Akkumulatorzellen und/oder mit einem Verbraucher zur Abgabe elektrischer Energie angeordnet ist.

12. Akkumulatorsystem (1) nach einem der vorhergehenden Ansprüche,
**dadurch gekennzeichnet, dass**
die Leistung des Akkumulators (11) in mehreren Stufen einstellbar ist.

13. Fahrrad mit einem Akkumulatorsystem nach einem der vorhergehenden Ansprüche.

14. Fahrrad nach Anspruch 13,
**dadurch gekennzeichnet, dass**
die Satteltasche (14) an einer Sattelstange, die im Fahrradrahmen angeordnet ist, und / oder an dem Sattel angeordnet ist.
